# EUROPEAN PATENT APPLICATION

(11) **EP 4 851 897 A1**
(43) Date of publication of application: **09.12.2026**
(21) Application number: 25181298.8
(22) Date of filing: 06.06.2025
(51) Int. Cl.: G06Q 20/06, G06Q 20/36, G06Q 20/40

(54) **SECURE HARDWARE UNIT, REPOSITORY UNIT, METHOD FOR REFUNDING AND ELECTRONIC PAYMENT TRANSACTION SYSTEM**

(71) Applicant: Giesecke+Devrient advance52 GmbH, 81677 München (DE)
(72) Inventor: BOHN, Markus, 81677 München (DE); EL AOUAM, Chaima, 81677 München (DE)
(74) Representative: Ter Meer und Partner mbB

(57) **Abstract**

The present invention relates to secure hardware unit for performing electronic payment transactions within an electronic payment transaction system, a repository unit within an electronic payment transaction system for providing proof of monetary value of secure hardware units within the electronic payment transaction system, a method for refunding the monetary value of one or more token stored in the storage unit of a secure hardware unit, and an electronic payment transaction unit. In other words, the present invention relates to units and methods for providing sufficient proof of monetary value stored in secure hardware units.

## Description

The present invention relates to secure hardware unit for performing electronic payment transactions within an electronic payment transaction system, a repository unit within an electronic payment transaction system for providing proof of monetary value of secure hardware units within the electronic payment transaction system, a method for refunding the monetary value of one or more token stored in the storage unit of a secure hardware unit, and an electronic payment transaction unit. In other words, the present invention relates to units and methods for providing sufficient proof of monetary value stored in secure hardware units.

Tokens - also referred to as digital assets, electronic coins, coin data sets - may represent any digital asset, particularly a digital currency, preferably a central bank digital currency, short CBDC. Conventionally, these tokens are minted (e.g. created) by an issuing unit or token issuing unit. These tokens are melted (e.g. destroyed) by the issuing unit or a dismissing unit of the token transaction system. The issuing unit and/or dismissing unit may be an issuing authority, or a central bank unit or a commercial bank unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

According to one technical approach for a digital asset e.g., digital currency such as central bank digital currency, CBDC, issued by a central bank, as for instance described in WO 2020 / 212 331 A1 or WO 2023 / 036 458 A1, tokens are stored in a local token management unit to be directly exchanged between participants of an electronic payment transaction system. The transferred token can validly be used after receipt from another participant without a need for approval or verification via an online connection. So, if an online connection is not available or inconvenient or should not be used for a specific token transaction (payment transaction), it remains possible to validly transfer tokens directly between participants in the electronic payment transaction system. For security-, verification- and registration-purposes, a token register stores token references of all valid tokens without knowing the tokens itself. So, the user can check the validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

Each participant in the electronic payment transaction system according to this approach comprises a transaction unit or token management unit that is assigned to him. These secure hardware units, such as secure elements, smart cards, local wallets, software applications hosted at a terminal device of a participant may have malfunctions, may be broken, or may be stolen or may be lost. Since the owner of the token is unable to access the tokens, he may suffer significant monetary (financial) damage, because the monetary value is blocked in inaccessible tokens. In addition, in case the secure hardware unit is stolen, a theft may use the tokens to perform transactions as fraud.

It has been known for years that for the purpose of data redundancy, copies of data may be stored external from the hardware unit, e.g. an external storage unit, such as an external USB flash drive or an online storage (cloud storage). Such schemes are undesired within electronic payment transaction systems as these always bear the risk of double spending of money and have the disadvantage that large amounts of data might be necessary to transmit which slows down the entire payment transaction and reduces user convenience.

In WO 2022 / 008 322 A1, a secure hardware unit generates encrypted transaction data records that are stored in dedicated transaction registers and that can only be decrypted by combining parts of keys to increase security and involve authorities, such as law enforcement, because decrypting these transaction data destroys anonymity, e.g. to detect fraud.

In EP 4 451 190 A1, token recovery data sets are generated that are uniquely assigned to the tokens within a secure hardware unit. These token recovery data sets are transmitted to a recovery unit to block and/or to recover the tokens upon request. Here it is desired to reactivate blocked or lost tokens. It turned out that such a recovery concept heavily overloads the payment transaction system. If it is desired to refund the blocked monetary value of tokens of a lost or stolen hardware device, the solution should be much simpler.

As the user (participant, assignee) of a secure hardware unit may not be interested in recovering the token - as he has higher interests in refunding of respective monetary values without losing privacy and anonymity - a much easier approach is desired.

However, as many bearer instrument payment solutions cannot be refunded once a hardware unit is lost or malfunctioning, the participants must reliably proof what was on the hardware unit or the refunding unit, such as a financial service provider unit, needs to trust the participant.

So, there is a need to provide proof of the amount of monetary value that should be refunded once a transaction unit is not accessible, malfunctioning, stolen, or lost (herein commonly defined as unreachable state). It is important that other token elements of the token are not revealed to ensure data protection and anonymity in the transaction system. It should be possible to refund monetary value of a stolen, destroyed, or malfunctioning secure hardware unit without reducing anonymity to avoid a financial damage to the participant to whom the secure hardware unit is assigned.

The above-identified objectives are solved with the features of the independent patent claims. Further advantageous embodiments are described in the dependent patent claims.

In an aspect of the present invention there is provided a secure hardware unit for performing electronic payment transactions with an electronic payment transaction system. The secure hardware unit comprises a storage unit for storing: one or more token, wherein each token comprises at least a monetary value and a private key of a token-individual key pair, and a cryptographic key of the secure hardware unit (that preferably is generated prior the first transaction performed with this secure hardware unit) as well as a control unit which is configured to generate balance-backup-information for refunding the monetary value of the one or more token stored in the storage unit; encrypt the generated balance-backup information using the cryptographic key stored in the storage unit; and transmit the encrypted balance-backup information to another secure hardware unit within the electronic payment transaction system.

Balance-backup-information is data that is used as evidence or proof within a refunding method to identify the correct amount of monetary value that should be refunded to the participant in case the secure hardware unit assigned to him cannot be reached anymore. The balance-backup-information may be seen as a small trace data including the balance. The balance herein may refer to either each monetary value of each token (a single value per each token) stored in the secure hardware unit or it may refer to the sum of all monetary values of all tokens (a sum value or total value of all tokens) stored in the secure hardware unit - at the time when this balance-backup-information is generated and/or encrypted. The inventive concept is applicable to token-based payment systems as well as balance-based payment systems.

Each balance-backup-information may comprise one or more token references that are uniquely assigned to the one or more tokens at the time of generating the balance-backup-information. The balance-backup-information preferably further comprising a secure hardware unit identifier for uniquely identifying the at least one secure hardware unit. The secure hardware unit identifier may be referred to as wallet-ID that may be unique in the electronic payment system.

So, the balance can be traced. If the secure hardware unit is in an unreachable state, the inventive concept allows to recall where/when the secure hardware unit has generated this balance-backup-information last time and therefore data can be request as a proof. Here, the payment partner - the other secure hardware unit - will eventually upload it to a repository unit eventually. If required, the participant can request the data from this other secure hardware unit or collect it from the repository unit and decrypt it with the key.

Each token may comprise a monetary value and a private key of the token-individual key pair as token-individual token elements. One or more token references may comprise the monetary value of the assigned token and a public key corresponding to a private key of the token-individual key pair. So, the unique assignment between token and token reference is the token-individual key pair.

The control unit may be configured to access the storage unit of the secure transaction unit.

The secure hardware unit may comprise a token storage as a physical entity. The secure hardware unit may be configured to access the storage. The storage may be a token vault of this secure transaction unit. Each secure transaction unit in the transaction system may comprise its own token storage.

From such storage accessible by the secure hardware unit, each token can be transferred to any other secure hardware unit, e.g., owned by a customer of the secure hardware unit.

The term "transaction" or "electronic payment transaction" may represent a transaction of a monetary value token between a sender (payer) and a recipient (payee). A transaction of the monetary value token may represent a payment transaction, i.e., the change of ownership of an amount of money which corresponds to the monetary values of the token involved in the transaction. A transaction may include a request for a monetary value by the transaction partner.

The secure hardware unit may also be referred to as a secure token transaction unit. The secure hardware unit includes a storage unit which may be further configured to store one or more tokens. Each token may be a monetary value token, preferably a central bank digital currency token. The storage unit may be configured to store only references or links to one or more tokens stored centrally.

The control unit may be further configured to negotiate a secure payment channel with a further secure hardware unit, e. g., the secure hardware unit of a transaction partner. The control module may be further configured to exchange a token with the further secure hardware unit, either acting in the payer role or in the payee role.

The control unit may be further configured to negotiate a secure payment channel with a further secure hardware unit, e. g., the secure hardware unit of a transaction partner. The control module may be further configured to exchange a token with the further secure hardware unit, either acting in the payer role or in the payee role.

Each secure hardware unit may comprise one identifier, also referred to as secure token transaction unit identifier, ID, wallet-ID or wallet identification data. The identifier of the secure hardware unit may be assigned to a specific secure hardware unit for uniquely identifying the secure hardware unit in the electronic payment system. The identifier is stored in the storage unit of the specific secure hardware unit. The identifier may be bound to a private key of the secure hardware unit, via a certificate. The control unit may be configured to sign data based on the identifier of the secure hardware unit, i. e., using the private key of the secure hardware unit which is linked to its identifier.

In one embodiment, the secure hardware unit may be or include a secure cryptographic device, e. g., as specified according to ISO 13491-1. The secure hardware unit may be or include a device that provides physically and logically protected cryptographic services and storage, and which can be integrated into a larger system, such as an automated teller machine (ATM) or point-of-sale (POS) terminal.

The control unit is configured to select the monetary value for the new token independently from any existing token within the electronic payment transaction system. In other words, the monetary value of the new token increases the monetary value sum available in the form of tokens within the entire electronic payment transaction system.

In one alternative, the cryptographic key is a public key of a secure hardware unit individual key pair, preferably generated by the secure hardware unit or by the financial service provider unit that issues or manages the secure hardware unit. The respective private key may be stored outside of the secure hardware unit, preferably at the service provider unit or a secure hardware unit issuer or a repository unit or another trusted third party unit within the electronic payment transaction system. Such an asymmetric key pair - that is preferably generated prior the first payment transaction of the secure hardware unit - can be generated by the secure hardware unit itself with onboard means and the respective private key should be stored outside the secure hardware unit so that in case it is unreachable, the encrypted balance-backup-information can be decrypted. In other words: The private key is stored securely outside the device, the public key stays with the device.

In another alternative, the cryptographic key is a symmetric key that is negotiated with one or more of the following entities within the electronic payment transaction system: repository unit that is configured to store encrypted balance-backup-information of one or more secure hardware units; token reference register that is configured to store token references of the tokens; service provider unit that is configured to manage the secure hardware unit; a trusted third party unit that is configured for providing proof required for refunding monetary values or tokens. Such a symmetric key - that is preferably generated/negotiated prior the first payment transaction of the secure hardware unit - may be a session key when having an initial communication with one of the above identities and such a key is automatically also stored outside the secure hardware unit so that in case it is unreachable, the encrypted balance-backup-information can be decrypted.

In both alternatives, the participant should generate (create) the key prior first transaction.

The token reference register is a unit of the electronic payment transaction system that stores token references, whereby the associated tokens are registered. This token reference register can be a central database or storage unit of the electronic payment transaction system. This token reference register may be a decentralized ledger, for example in a blockchain topology. The token reference register may maintain a history of token references and/or registration requests. The basic principle of registering a token is that a received registration request is verified by the token reference register to see whether the token reference assigned to the token is already known in the token reference register. If the token reference is already known, it is not stored again. If the token reference is not known, it is entered (stored) in the token reference register to be available for future verification and check steps in the secure payment transaction system.

A token reference is stored only once in the token reference register. Since a token reference of a token exists only once in the transaction system, the verifying unit can determine whether an attempt was made to spend a token more than once.

The token reference comprises the monetary value of the uniquely assigned token. This monetary value can be used to further validate the registration request at the token reference register.

Decrypted balance-backup-information - once decrypted - are configured as a proof of the monetary value of the one or more tokens stored in the secure hardware unit at the time when the balance-backup-information was generated. This proof is used in case the secure hardware unit is in the unreachable state.

Unreachable state of the secure hardware unit may mean that it cannot be accessed for several reasons, such as a malfunction, stolen, or lost. In any case, the storage unit cannot be accessed and token information, especially the monetary values thereof cannot be retrieved therefrom. The balance-backup-information can now be used as evidence/proof by the participant of an amount of monetary value that should be refunded.

Decrypted balance-backup-information - once decrypted - are configured as proof of the tokens (itself) stored in the secure hardware unit at the time when the balance-backup-information was generated. This proof can be made via the monetary values of the token references that are uniquely assigned to respective tokens via token-individual key pairs - if these token references are used as the balance-backup-information, which may be the case for implementation of the payment transaction systems.

The balance-backup information may include one or more of the following: the monetary value of the one or more tokens stored in the storage unit and a time stamp; a payment transaction counter configured to identify a payment transaction with the other secure hardware unit; and one or more token references of the one or more tokens stored in the storage unit and a time stamp. A time stamp logs the time at which the balance-backup-information was generated so that there is a direct link between this information and the time when it was made. So, it is the time when this balance-backup-information is generated and/or encrypted.

Preferably, the control unit is further configured to transmit one or more tokens together with the encrypted balance-backup information within a payment transaction to the other secure hardware unit. So, every time the secure transaction unit is used within a payment transaction, the balance-backup-information is also transmitted to the payment partner. So, the balance can be traced. If the secure hardware unit is in an unreachable state, the inventive concept allows to recall where/when the secure hardware unit was used last time and therefore data can be request as a proof.

Preferably, the payment transaction is an offline payment transaction. So, the hardware unit does not need an online connectivity, and the balance-backup-information is still available. So, the secure hardware unit may be operated in an offline mode. Here, the payment partner - the other secure hardware unit - will eventually upload it to a repository unit eventually. If required, the participant can request the data from this other secure hardware unit or collect it from the repository unit and decrypt it with the key.

The control unit may further be configured to directly transmit the encrypted balance-backup information within an online payment transaction to a repository unit within the electronic payment transaction system. So, the secure hardware unit may be operated in an offline mode and in an online mode and in dependence on the mode, it may provide the encrypted balance-backup-information to the repository unit on its own (online mode) or via the other secure hardware unit (offline mode), where the payment partner will eventually upload it to a repository unit eventually. In each mode and if required, the participant can request the data from this other secure hardware unit or collect it from the repository unit and decrypt it with the key.

When in offline mode, the secure hardware unit may only perform offline electronic payment transactions which are defined herein as a direct transaction between two secure hardware units that participate in the transaction, e.g. the secure hardware unit that initiates the token transfer (payer) and/or the secure hardware unit that receives a token (payee). At least one of payer or payee has no access and cannot communicate with remote instances of the transaction system, such as a token reference register, a repository unit, a token issuing unit and/or a service provider unit, such as financial service provider (FSP) via classical internet or mobile communication means. The token transfer may then take place by local wireless communication means, such as Bluetooth, NFC, or any other suitable wireless communication protocol. The token transfer may also take place by contact-based communication means, such as USB, ISO 7816, or any other suitable contact-based communication protocol.

When in online mode, the secure hardware unit may perform offline electronic payment transactions (as described above) as well as online electronic payment transactions in which both, payer and payee have access and can communicate with remote instances of the transaction system, such as a token reference register, a repository unit, a token issuing unit and/or a service provider unit, such as financial service provider (FSP) via classical internet or mobile communication means.

The encrypted balance-backup information may be transmitted only if a backup-criteria is fulfilled. Such backup criteria may be one or more of the following conditions:
The monetary value of the one or more token stored in the storage unit exceeds a predefined threshold value, preferably reached upon receipt of further tokens or reached upon generation of new tokens within the secure hardware unit, e.g. 20 € or more, preferably 50€ or more as the predefined threshold value.

An amount of transactions without transmitting encrypted balance-backup-information exceeds a predefined threshold value, e.g. 5 transactions or more, preferably 10 transactions or more as the predefined threshold value.

The monetary value of the one or more token stored in the storage unit is changed within a predefined range value, preferably changed upon receipt of further tokens or changed upon generation of new tokens within the secure hardware unit, e.g. 5 € or more, preferably 10 € or more as the predefined range value.

In an aspect there is also provided a repository unit within an electronic payment transaction system for providing proof of monetary value of secure hardware units within the electronic payment transaction system. The repository unit may be an own central register with the system, or it may be a sub-unit of an existing unit, such as a part of the token reference register or an issuer unit or a service provider unit.

The repository unit comprises a storage unit for storing a plurality of encrypted balance-backup-information received from secure hardware units, and a control unit which is configured to: receive a proof request for providing balance-backup-information of a specific secure hardware unit from a service provider unit; and transmit the balance-backup information to the requesting service provider unit, preferably in encrypted form. Here, the proof request may include additional information to identify the specific secure hardware unit so as to provide the corrected balance-backup-information. So, the service provider unit requests the proof and in return receives the balance-backup-information. To increase the security, it is preferred that the balance-backup information is transmitted to the service provider unit in encrypted form and the service provider unit decrypts this information with the respective key to retrieve decrypted balance-backup-information as a proof for refunding the monetary value.

Preferably, the control unit is further configured to decrypt the encrypted balance-backup information using the cryptographic key of the secure hardware unit (in case of an asymmetric key scheme, the cryptographic key is the private key of the key pair, whereas the public key was used for encryption); and transmit the decrypted balance-backup information to the requesting service provider unit.

The storage unit of the repository unit may be configured to store cryptographic keys of the secure hardware unit used for decrypting the encrypted balance-backup-information.

The control unit may be further configured to receive the cryptographic keys of the secure hardware unit used for decrypting the encrypted balance-backup-information from the service provider unit (SPU) with the proof request.

The repository unit may be a financial service provider unit. The financial service provider unit may be configured to issue and/or manage secure hardware units. In an implementation, the financial service provider unit may be configured to issue and/or manage a subset of the secure hardware units.

Preferably, the repository unit hosts or stores or manages a plurality of encrypted balance-backup-information from a plurality of secure hardware units that are assigned to different participants in the transaction system.

There may be a plurality of repository units in the electronic payment transaction system.

The balance-backup-information is decrypted and read by the financial service provider unit upon refunding request from the participant in the electronic payment transaction system to whom the one of a plurality of secure hardware units is assigned. This may be initiated for refunding the monetary value of tokens stored within the assigned secure hardware unit.

In another aspect there is provided a method for refunding the monetary value of one or more token stored in the storage unit of a secure hardware unit within an electronic payment transaction system, the method comprising the following steps: receive, at a repository unit as described herein, a proof request for providing balance-backup-information of a specific secure hardware unit within the electronic payment transaction system that is in an unreachable state, from a service provider unit within the electronic payment transaction system; decrypt, by the repository unit or the service provider unit, the encrypted balance-backup information using the cryptographic key of the secure hardware unit; refund, by the service provider unit, the monetary value according to the decrypted balance-backup-information of the secure hardware unit that is in an unreachable state.

Prior the refund-step, the repository unit may transmit the decrypted balance-backup information to the requesting service provider unit, preferably in encrypted form as this enhances the security as described above.

Prior the receive-step, the repository unit may receive the encrypted balance-backup-information from a payment transaction partner of the specific secure hardware unit that is in the unreachable state or by the specific secure hardware unit itself.

In another aspect there is provided an electronic payment transaction system comprising: one or more secure hardware units as described herein; and a repository unit as described herein and a service provider unit configured to manage one or more of the secure hardware units and per se configured to refund a monetary value based on decrypted balance-backup-information.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure hardware unit according to an aspect of the disclosure.
Fig. 2 shows an exemplary embodiment of a repository unit according to an aspect of the disclosure.
Fig. 3 shows an exemplary embodiment of a data structure in which encrypted balance-backup-information is transmitted to the other secure transaction unit together with a payment transaction according to an aspect of the disclosure.
Fig. 4 shows an exemplary embodiment of an electronic payment transaction system according to an aspect of the disclosure.

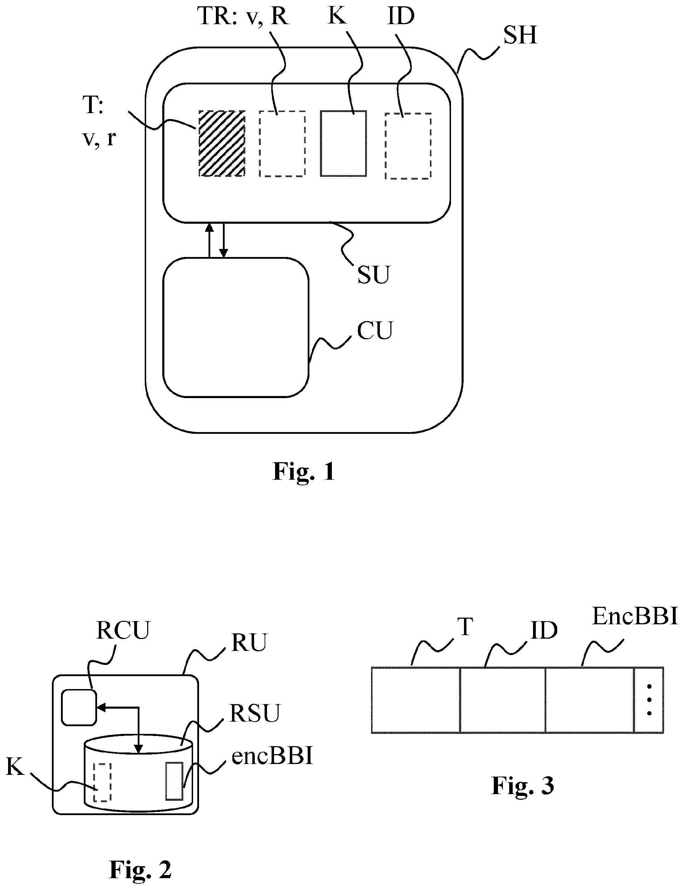

In Fig. 1 a schematic representation of an exemplary embodiment of a secure hardware unit SH according to an aspect of the disclosure is depicted. The secure hardware unit SH includes a storage unit SU and a control unit CU.

In the storage unit SH, an identifier ID of the secure hardware unit SH is stored. The identifier ID may be a certificate which is bound to a private key of the secure hardware unit SH. The identifier may include an identifier of the service provider unit SPU which is linked to the secure hardware unit SH, e. g., through a reference account which may be debited or refunded upon minting or melting tokens.

The secure hardware unit SH may be configured to establish a near-field communication channel to a terminal device (not shown) or may be hosted by a terminal device (not shown). The terminal device or host may run an application through which the secure hardware unit SH, more precisely its control unit CU, may communicate with entities of the electronic payment transaction system TS, in particular air-gapped, central entities such as a service provider unit SPU, a secure token reference register T-Reg, a repository unit RU, an issuance entity, a central bank component, or other external entities within the electronic payment transaction system TS.

The storage unit SU may be configured to store one or more tokens T or a link to one or more tokens stored somewhere else in the electronic payment transaction system TS. The storage unit SU may be configured to store an archive, a collection or a library of commands, which may include a create command, a switch command, a destroy command, and so on. The storage unit SU may be configured to store the token individual cryptographic key pair r, R generated for token T and token reference TR (optional in Fig. 1). Furthermore, a cryptographic key K is stored in the storage unit SU. This key K is a secure hardware unit SH individual key that may be the public part of an asymmetric key pair or it may be a symmetric key that is shared with for instance the repository unit RU or the service provider unit SPU.

The control unit CU is configured to generate the asymmetric cryptographic key pair. The cryptographic private key is a secret that is transferred by the CU to the repository unit RU or the financial service provider unit SPU. The private key should be stored outside the secure hardware unit SH so that it can be used later in the event, the secure hardware unit is unreachable. The cryptographic public key K remains in the storage unit SU and is used within the refunding method to encrypt balance-backup-information BBI.

The control unit CU is configured to generate balance-backup-information BBI for refunding the monetary value v of the one or more token T stored in the storage unit SU.

The control unit CU is configured to encrypt the generated balance-backup information BBI using the cryptographic key K stored in the storage unit SU.

The control unit CU is further configured to transmit the encrypted balance-backup information encBBI to another secure hardware unit OSH within the electronic payment transaction system TS. In other words, the control unit CU is configured to generate proof of the monetary value v and send it in encrypted form to the other secure transaction unit OSH also referred to as payment partner.

In Fig. 2 a schematic representation of an exemplary embodiment of a repository unit RU according to an aspect of the disclosure is depicted. The repository unit RU includes a storage unit RSU and a control unit RCU.

The storage unit RSU is configured to store a plurality of encrypted balance-backup-information encBBI received from secure hardware units SH.

The control unit RCU is configured to receive a decryption request for decrypting encrypted balance-backup-information encBBI of a specific secure hardware unit SH from a service provider unit SPU.

The control unit RCU may be configured to decrypt the encrypted balance-backup information encBBI using the cryptographic key K of the secure hardware unit SH. It is the same cryptographic key K if a symmetric key K is used. If an asymmetric key scheme is used, such as a public key infrastructure, PKI, the term "cryptographic key K" refers to a key pair that comprises a public key that is stored in the storage unit SU of the secure hardware unit SH and used for encryption and further comprises a private key that is used for decryption of the encrypted balance-backup-information encBBI. Here, the cryptographic key is the private key k of the key pair k, K generated by the secure hardware unit SH.

The control unit RCU is further configured to transmit the decrypted balance-backup information decBBI to the re-questing service provider unit SPU.

Fig. 3 shows a data structure that may be exchanged between the secure hardware unit SH and another secure hardware unit OSH within a payment transaction.

The data structure may include a first attribute, in which the token T that should be transferred may be stored. The data structure may include a second attribute, in which the identifier ID from the secure hardware unit SH may be stored. The data structure may include a third attribute, in which encrypted balance-backup-information encBBI may be stored. The data structure may include further attributes (depicted by the three dots in Fig. 3), in which further values may be stored.

The encrypted balance-backup-information encBBI may be the monetary value v from the storage unit SU of the secure hardware unit SH encrypted with the key K. Alternatively, the encrypted balance-backup-information encBBI may be one or more token references TR assigned to all remaining tokens T in the storage unit SU of the secure hardware unit SH.

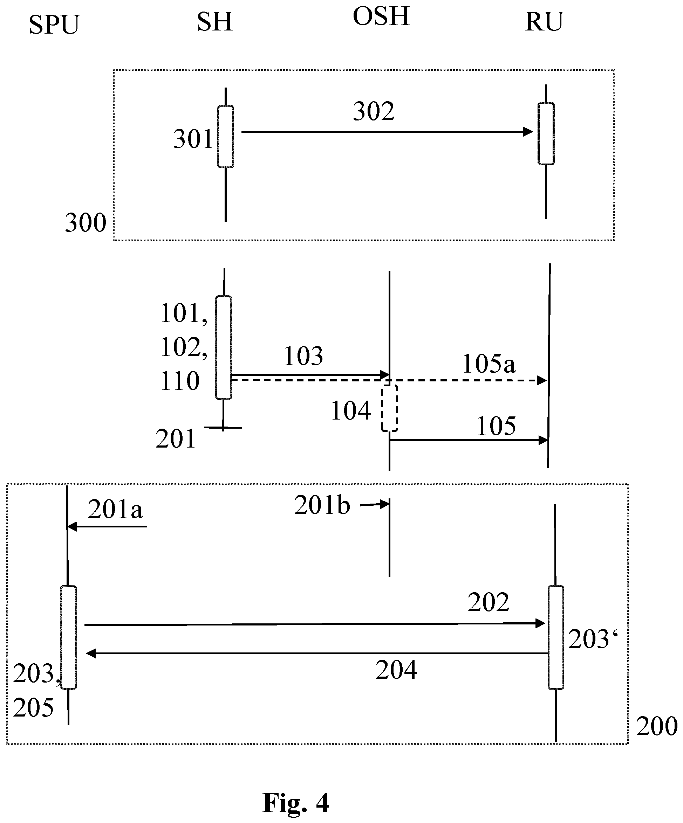

In Fig. 4 a schematic representation of an exemplary embodiment of an electronic payment transaction system TS according to an aspect of the disclosure is depicted. The electronic payment transaction system TS in the example of Fig. 4 includes a repository unit RU, a secure hardware unit SH, one another secure hardware unit OSH, and a service provider unit SPU.

The service provider unit SP may manage a reference account to be debited and/or refunded of monetary values v of tokens T.

The functionality of the secure hardware unit SH may correspond to the one described with respect to Fig. 1. The functionality of the repository unit RU may correspond to the one described with respect to Fig. 2. The collective functionality of the system, i. e., interactions between the secure hardware units SH, the service provider unit SPU and the repository unit RU are described on a method step level hereinafter.

Although depicted as a stand-alone element in Fig. 4, the repository unit RU may be a component of the token reference register T-REG or the service provider unit SPU in the electronic payment transaction system TS.

The vertical dimension in Fig. 4 is a time dimension, i. e, the time evolves in the timing sequence starting from the heading of each column / line along the respective line, for each line concurrently. The embodiment of Fig. 4 shows an offline payment transaction between the secure hardware unit SH and the other secure hardware unit OSH with proof of monetary value and shows a refunding method according to the invention.

The payment operation as depicted in the example of Fig. 4 may be initialized by the other secure hardware unit OSH, which is assigned to a user (end user) of the electronic payment transaction system TS. Initiating the payment operation may include a payment request which may be generated within a host application linked to the other secure hardware unit OSH and run on the terminal device (not shown). Based on this payment request, the secure hardware unit SH generates 101 balance-backup-information BBI; encrypts 102 the generated balance-backup-information BBI; and transmits 103 these encrypted balance-backup-information encBBI to the other secure hardware unit OSH. The data structure within the transmitting step 103 may correspond to the one described with respect to Fig. 3. In one embodiment, the secure hardware unit SH may sign 110 this payment transaction based on the identifier ID of the secure hardware unit SH.

The method further includes, by the other secure hardware unit SH, an optional extracting 104 of the encrypted balance-backup-information encBBI from the data structure as transmitted in step 103. Afterwards, the encrypted balance-backup-information encBBI is received 105 at the repository unit RU. This may be the case, if the payment transaction is an offline transaction.

In a variant of this method, the secure hardware unit SH directly transmits the encrypted balance-backup-information encBBI to the repository unit RU in step 105a. This may be the case if the payment transaction is an online transaction.

In Fig. 4, there is also shown a refunding phase 200 that is framed in dashed lines below the steps 101 to 110.

The user recognizes 201 that the secure hardware unit SH is in an unreachable state and he initiates a refunding method at the service provider unit SPU in which he requests for refunding 201a the monetary value v that is blocked within the unreachable secure hardware unit SH. The refunding request 201a may include the ID of the secure hardware unit SH. However, if there is a one-to-one assignment of user and secure hardware unit SH, the service provider unit SPU can retrieve the ID from an own data storage.

The service provider unit SPU now needs proof about the amount (monetary value) to be refunded. For that he may ask the user back and the user may ask for proof at the other secure hardware unit OSH in step 201b. More preferred, the service provider unit SPU sends 202 a proof request to the repository unit RU, preferably together with the ID. Upon receipt of the proof request, the repository unit transmits 204 the encrypted balance-backup-information encBBI from the repository unit RU to the service provider unit SPU. In the service provider unit SPU, the encrypted balance-backup-information encBBI are decrypted 203 and the decrypted balance-backup-information encBBI are used as proof for refunding 205 the monetary value to an account of the user. In this scenario, the cryptographic key K (meaning the private key k or the symmetric key K as explained above) remains at the service provider unit SPU and is not shared with the repository unit RU. Whenever a refund request occurs in step 201a, the service provider unit SPU sends the proof request in step 202 and the repository unit RU returns the encrypted balance-backup-information encBBI to the service provider unit SPU that in return decrypts it using the key K.

In an alternative variant, it is indicated with step 203' in Fig. 4 that the repository unit RU (instead of the SPU) can decrypt the encrypted balance-backup-information encBBI. For that, the proof request includes the cryptographic key K that is provided from the service provider unit SPU to the repository unit RU for this decryption purpose. In the transmit step 204, the decrypted balance-backup-information decBBI are provided back to the service provider unit.

In Fig. 4, there is also shown a key generation phase 300 that is framed in dashed lines. This key generation occurs prior to the first payment transaction. Here, the secure hardware unit SH generates 301 an asymmetric key pair, stores the public key K in its storage unit SU and sends 302 the private key k to the repository unit RU. The sending step 302 may alternatively be performed to the service providing unit (SPU) that in return provides the private key k to the repository unit RU during the proof request (not shown).

Most preferred, the key K (either private key k or symmetric key K) always remains at the service provider unit SPU for security reasons and is not shared with the repository unit RU. Whenever a refund request occurs in step 201a, the service provider unit SPU sends the proof request in step 202. The repository unit RU returns the encrypted balance-backup-information encBBI to the service provider unit SPU that in return decrypts it using the key K.

In a variant, the cryptographic key K is a symmetric shared key that is negotiated between the secure hardware unit SH and the repository unit RU prior to the first payment transaction.

### Reference list

- SH: Secure Hardware Unit
SU Storage unit
CU Control Unit
T Token
TR Token reference of token T
v monetary value
r private key of token-individual key pair
R public key of token-individual key pair
K key of secure hardware unit, public key
k private key of secure hardware unit
ID identifier of SH
- OSH: Other secure hardware unit
- TS: electronic payment transaction system
- RU: Repository unit
RCU Control unit of RU
RSU Storage unit of RU
- SPU: Service Provider Unit
- BBI: balance-backup information
- encBBI: encrypted BBI
- decBBI: decrypted BBI

- 101: generate BBI
- 102: encrypt BBI
- 103: transmit encBBI to OSH
- 104: extract encBBI
- 105, 105a: transmit encBBI to RU
- 200: refunding phase
- 201: SH in unreachable state
- 201a: refunding request from user
- 201b: refunding request to OSH
- 202: decrypting request to RU
- 203, 203': decrypt the encrypted BBI
- 204: transmit BBI
- 205: refund the monetary value
- 300: key generation phase
- 301: key generating
- 302: provide private key

## Claims

1. A secure hardware unit (SH) for performing electronic payment transactions within an electronic payment transaction system (TS), comprising:
• a storage unit (SU) for storing:
∘ one or more token (T), wherein each token (T) comprises at least a monetary value (v) and a private key (r) of a token-individual key pair, and
∘ a cryptographic key (K) of the secure hardware unit (SH), and
• a control unit (CU) which is configured to:
∘ generate (101) balance-backup-information (BBI) for refunding the monetary value (v) of the one or more token (T) stored in the storage unit (SU);
∘ encrypt (102) the generated balance-backup information (BBI) using the cryptographic key (K) stored in the storage unit (SU);
∘ transmit (103) the encrypted balance-backup information (encBBI) to another secure hardware unit (OSH) within the electronic payment transaction system (TS).

2. The secure hardware unit (SH) according to claim 1, wherein the cryptographic key (K) is a public key of a secure hardware unit individual key pair, preferably generated (301) by the secure hardware unit (SH), wherein preferably the respective private key (k) is stored (302) outside of the secure hardware unit (SH), preferably at a service provider unit (SPU) or a secure hardware unit issuer or a repository unit (RU) or a trusted third party unit within the electronic payment transaction system (TS).

3. The secure hardware unit (SH) according to claim 1, wherein the cryptographic key (K) is a symmetric key that is negotiated with one or more of the following entities within the electronic payment transaction system (TS):
• Repository unit (RU) configured to store encrypted balance-backup-information (encBBI) of one or more secure hardware units (SH);
• Token reference register (T-REG) configured to store token references (TR) of the tokens (T);
• Service provider unit (SPU) configured to manage the secure hardware unit (SH);
• A trusted third party unit configured for providing proof required for refunding monetary values or tokens.

4. The secure hardware unit (SH) according to any of the preceding claims, wherein decrypted balance-backup-information (BBI) once decrypted are configured as a proof of the monetary value (v) of the one or more tokens (T), preferably the one or more token (T) stored in the secure hardware unit (SH) at the time when the balance-backup-information was generated, this proof is used in case the secure hardware unit (SH) is in an unreachable state.

5. The secure hardware unit (SH) according to any of the preceding claims, wherein the control unit (CU) is further configured to transmit (103) one or more tokens (T) together with the encrypted balance-backup information (BBI) within a payment transaction to the other secure hardware unit (SH), wherein preferably the payment transaction is an offline payment transaction.

6. The secure hardware unit (SH) according to claim 5, wherein the control unit (CU) is further configured to directly transmit the encrypted balance-backup information (BBI) within an online payment transaction to a repository unit (RU) within the electronic payment transaction system (TS).

7. The secure hardware unit (SH) according to any of the preceding claims, wherein the encrypted balance-backup information (BBI) is transmitted only if a backup-criteria is fulfilled, the backup criteria is one or more of the following conditions:
• the monetary value (v) of the one or more token (T) stored in the storage unit (SU) exceeds a predefined threshold value, preferably reached upon receipt of further tokens or reached upon generation of new tokens within the secure hardware unit (SH);
• an amount of transactions without transmitting encrypted balance-backup-information (BBI) exceeds a predefined threshold value;
• the monetary value (v) of the one or more token (T) stored in the storage unit (SU) is changed within a predefined range value, preferably changed upon receipt of further tokens or changed upon generation of new tokens within the secure hardware unit (SH).

8. The secure hardware unit (SH) according to any of the preceding claims, wherein the balance-backup information (BBI) includes one or more of the following:
• the monetary value (v) of the one or more tokens (T) stored in the storage unit (SU) and a time stamp;
• a payment transaction counter configured to identify a payment transaction with the other secure hardware unit (SH); and
• one or more token references (TR) of the one or more tokens (T) stored in the storage unit (SU) and a time stamp.

9. A repository unit (RU) within an electronic payment transaction system (TS) for providing proof of monetary value of secure hardware units (SH) within the electronic payment transaction system (TS), the repository unit (RU) comprising:
• a storage unit (RSU) for storing a plurality of encrypted balance-backup-information (encBBI) received from secure hardware units (SH), and
• a control unit (RCU) which is configured to:
∘ receive (202) a proof request for providing balance-backup-information (encBBI) of a specific secure hardware unit (SH) from a service provider unit (SPU);
∘ transmit (204) the balance-backup information (decBBI) to the requesting service provider unit (SPU), preferably in encrypted form.

10. The repository unit (RU) according to claim 9, wherein the control unit (RCU) is further configured to:
• decrypt (203) the encrypted balance-backup information (BBI) using the cryptographic key (K) of the secure hardware unit (SH); and
• transmit (204) the decrypted balance-backup information (decBBI) to the requesting service provider unit (SPU).

11. The repository unit of claim 9 or 10, wherein the control unit (RCU) is further configured to receive the cryptographic keys (K) of the secure hardware unit (SH) used for decrypting the encrypted balance-backup-information (encBBI) from the service provider unit (SPU) with the proof request.

12. A method for refunding the monetary value (v) of one or more token (T) stored in the storage unit (SU) of a secure hardware unit (SH) within an electronic payment transaction system (TS), the method comprising the following steps:
• receive, at a repository unit (RU) according to one of the claims 9 to 11, a proof request for providing balance-backup-information (encBBI) of a specific secure hardware unit (SH) within the electronic payment transaction system (TS) that is in an unreachable state, from a service provider unit (SPU) within the electronic payment transaction system (TS);
• decrypt, by the repository unit (RU) or the service provider unit (SPU), the encrypted balance-backup information (BBI) using the cryptographic key (K) of the secure hardware unit (SH);
• refund, by the service provider unit (SPU), the monetary value (v) according to the decrypted balance-backup-information of the secure hardware unit (SH) that is in an unreachable state.

13. The method according to claim 12, wherein prior the refund-step, the repository unit (RU) transmits the balance-backup information (decBBI) to the requesting service provider unit (SPU), preferably in encrypted form.

14. The method according to one of the claims 12 or 13, wherein prior the receive-step, the repository unit (RU) receives the encrypted balance-backup-information (encBBI) from a payment transaction partner of the specific secure hardware unit (SU) that is in the unreachable state or by the specific secure hardware unit (SU) itself.

15. An electronic payment transaction system (TS) comprising:
- one or more secure hardware units (SH, OSH) according to any of the claims 1 to 8;
- a repository unit (RU) according to any of the claims 9 to 11;
- a service provider unit (SPU) configured to manage one or more of the secure hardware units (SH, OSH).

## Amended claims

### Amended claims in accordance with Rule 137(2) EPC.

1. A secure hardware unit (SH) for performing electronic payment transactions within an electronic payment transaction system (TS), comprising:
• a storage unit (SU) for storing:
o one or more token (T), wherein each token (T) comprises at least a monetary value (v) and a private key (r) of a token-individual key pair, and
o a cryptographic key (K) of the secure hardware unit (SH), and
• a control unit (CU) which is configured to:
o generate (101) balance-backup-information (BBI) for refunding the monetary value (v) of the one or more token (T) stored in the storage unit (SU);
o encrypt (102) the generated balance-backup information (BBI) using the cryptographic key (K) stored in the storage unit (SU); and
o transmit (103) the encrypted balance-backup information (encBBI) to another secure hardware unit (OSH) within the electronic payment transaction system (TS).

2. The secure hardware unit (SH) according to claim 1, wherein the cryptographic key (K) is a public key of a secure hardware unit individual key pair, preferably generated (301) by the secure hardware unit (SH), wherein preferably the respective private key (k) is stored (302) outside of the secure hardware unit (SH), preferably at a service provider unit (SPU) or a secure hardware unit issuer or a repository unit (RU) or a trusted third party unit within the electronic payment transaction system (TS).

3. The secure hardware unit (SH) according to claim 1, wherein the cryptographic key (K) is a symmetric key that is negotiated with one or more of the following entities within the electronic payment transaction system (TS):
• Repository unit (RU) configured to store encrypted balance-backup-information (encBBI) of one or more secure hardware units (SH);
• Token reference register (T-REG) configured to store token references (TR) of the tokens (T);
• Service provider unit (SPU) configured to manage the secure hardware unit (SH);
• A trusted third party unit configured for providing proof required for refunding monetary values or tokens.

4. The secure hardware unit (SH) according to any of the preceding claims, wherein decrypted balance-backup-information (BBI) once decrypted are configured as a proof of the monetary value (v) of the one or more tokens (T), preferably the one or more token (T) stored in the secure hardware unit (SH) at the time when the balance-backup-information was generated, this proof is used in case the secure hardware unit (SH) is in an unreachable state.

5. The secure hardware unit (SH) according to any of the preceding claims, wherein the control unit (CU) is further configured to transmit (103) one or more tokens (T) together with the encrypted balance-backup information (encBBI) within a payment transaction to the other secure hardware unit (OSH), wherein preferably the payment transaction is an offline payment transaction.

6. The secure hardware unit (SH) according to claim 5, wherein the control unit (CU) is further configured to directly transmit the encrypted balance-backup information (encBBI) within an online payment transaction to a repository unit (RU) within the electronic payment transaction system (TS).

7. The secure hardware unit (SH) according to any of the preceding claims, wherein the encrypted balance-backup information (BBI) is transmitted only if a backup-criteria is fulfilled, the backup criteria is one or more of the following conditions:
• the monetary value (v) of the one or more token (T) stored in the storage unit (SU) exceeds a predefined threshold value, preferably reached upon receipt of further tokens or reached upon generation of new tokens within the secure hardware unit (SH);
• an amount of transactions without transmitting encrypted balance-backup-information (BBI) exceeds a predefined threshold value;
• the monetary value (v) of the one or more token (T) stored in the storage unit (SU) is changed within a predefined range value, preferably changed upon receipt of further tokens or changed upon generation of new tokens within the secure hardware unit (SH).

8. The secure hardware unit (SH) according to any of the preceding claims, wherein the balance-backup information (BBI) includes one or more of the following:
• the monetary value (v) of the one or more tokens (T) stored in the storage unit (SU) and a time stamp;
• a payment transaction counter configured to identify a payment transaction with the other secure hardware unit (OSH); and
• one or more token references (TR) of the one or more tokens (T) stored in the storage unit (SU) and a time stamp.

9. A repository unit (RU) within an electronic payment transaction system (TS) for providing proof of monetary value of secure hardware units (SH) within the electronic payment transaction system (TS), the repository unit (RU) comprising:
• a storage unit (RSU) for storing a plurality of encrypted balance-backup-information (encBBI) received from secure hardware units (SH), and
• a control unit (RCU) which is configured to:
o receive (202) a proof request for providing balance-backup-information (BBI) of a specific secure hardware unit (SH) from a service provider unit (SPU);
o transmit (204) the balance-backup information (BBI) to the requesting service provider unit (SPU), preferably in encrypted form.

10. The repository unit (RU) according to claim 9, wherein the control unit (RCU) is further configured to:
• decrypt (203) the encrypted balance-backup information (encBBI) using the cryptographic key (K) of the secure hardware unit (SH); and
• transmit (204) the decrypted balance-backup information (decBBI) to the requesting service provider unit (SPU).

11. The repository unit of claim 9 or 10, wherein the control unit (RCU) is further configured to receive the cryptographic keys (K) of the secure hardware unit (SH) used for decrypting the encrypted balance-backup-information (encBBI) from the service provider unit (SPU) with the proof request.

12. A method for refunding the monetary value (v) of one or more token (T) stored in the storage unit (SU) of a secure hardware unit (SH) within an electronic payment transaction system (TS), the method comprising the following steps:
• receive, at a repository unit (RU) according to one of the claims 9 to 11, a proof request for providing encrypted balance-backup-information (encBBI) of a specific secure hardware unit (SH) within the electronic payment transaction system (TS) that is in an unreachable state, from a service provider unit (SPU) within the electronic payment transaction system (TS);
• decrypt, by the repository unit (RU) or the service provider unit (SPU), the encrypted balance-backup information (encBBI) using the cryptographic key (K) of the secure hardware unit (SH);
• refund, by the service provider unit (SPU), the monetary value (v) according to the decrypted balance-backup-information of the secure hardware unit (SH) that is in an unreachable state.

13. The method according to claim 12, wherein prior the refund-step, the repository unit (RU) transmits the balance-backup information (BBI) to the requesting service provider unit (SPU), preferably in encrypted form.

14. The method according to one of the claims 12 or 13, wherein prior the receive-step, the repository unit (RU) receives the encrypted balance-backup-information (encBBI) from a payment transaction partner of the specific secure hardware unit (SU) that is in the unreachable state or by the specific secure hardware unit (SU) itself.

15. An electronic payment transaction system (TS) comprising:
- one or more secure hardware units (SH, OSH) according to any of the claims 1 to 8;
- a repository unit (RU) according to any of the claims 9 to 11;
- a service provider unit (SPU) configured to manage one or more of the secure hardware units (SH, OSH).
